(19) [European Patent Office logo] Europäisches Patentamt / European Patent Office / Office européen des brevets

(11) **EP 1 821 467 B1**

(12) **EUROPEAN PATENT SPECIFICATION**

(45) Date of publication and mention
of the grant of the patent:
**10.09.2008 Bulletin 2008/37**

(51) Int Cl.:
***H04L 12/56*** *(2006.01)*

(21) Application number: **06110101.0**

(22) Date of filing: **17.02.2006**

(54) **Method and apparatus for motion-aware gateway selection for multihop handovers**

Verfahren und Vorrichtung zur bewegungsbewussten Gatewayauswahl für Weiterreichung in einem drahtlosen ad-hoc Mehrsprungnetz

Procédé et dispositif pour la sélection de passerelle tenant compte du mouvement pour les transferts dans un réseau à bonds multiples

(84) Designated Contracting States:
**DE GB**

(43) Date of publication of application:
**22.08.2007 Bulletin 2007/34**

(73) Proprietor: **NTT DoCoMo, Inc.**
**Tokyo (JP)**

(72) Inventor: **Hofmann, Philipp**
**80686 München (DE)**

(74) Representative: **Betten & Resch**
**Patentanwälte**
**Theatinerstrasse 8**
**80333 München (DE)**

(56) References cited:
**WO-A-20/04023740** **US-A1- 2005 153 725**

## Description

### FIELD OF INVENTION

The present invention relates to a method and an apparatus for motion aware gateway selection for multihop handovers in ad hoc networks with connection to fixed networks.

### BACKGROUND OF THE INVENTION

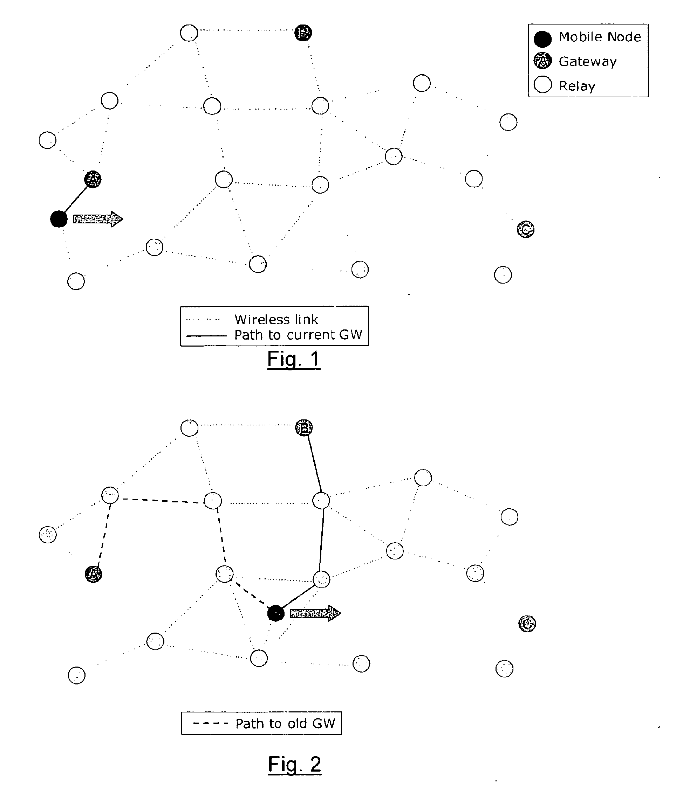

Connecting ad hoc networks with the Internet is useful for several application scenarios, enabling devices in ad hoc networks to access services in the Internet or to communicate with devices outside of their ad hoc network. An interworking functionality between the protocols in ad hoc networks and 'conventional' networks leads to a new paradigm in the design of radio access networks, namely Multihop Radio Access Networks (MRANs). As in existing cellular and wireless LAN systems, mobile nodes (MNs) can communicate with gateways (GWs, also known as base stations) via a wireless interface, and the gateways are somehow connected to the Internet via wired interfaces. The new feature is the multihop functionality of mobile nodes, which extends the radio coverage of the gateways. This architecture is interesting for high-rate mobile communication systems beyond the third generation (3G). It is especially suitable if the cell size is very small, e.g., due to operation at high frequencies and limited power of mobile devices. MRANs can solve the problem of weak indoor coverage and can help to reduce the transmission power of mobile devices, leading to longer battery lifetime and less emission. The multihop capability is expected to increase flexibility and reduce costs in network planning and operation. An example is shown in Fig. 1, where a mobile node (black) connects via a gateway (A) to the Internet, thereby using other mobile nodes as relays. Other candidate gateways (B and C) are also available.

Communication among mobile nodes and gateways is provided by an ad hoc routing protocol. Mobile nodes are able to detect available gateways by some means, e.g., the gateways may broadcast advertisements periodically. Furthermore, mobile nodes know the hop distance to the various gateways, e.g., by checking their routing tables.

When mobile nodes in MRANs need to perform a handover to a new gateway (either because the old gateway is not available or not the optimum one any more), they usually select the new gateway based on the distance in number of hops. This is reasonable in MRANs where mobile nodes are not moving fast. Always connecting to the closest gateway increases the reliability of the path to the gateway, thereby reducing delay and loss of payload packets. However, if mobile nodes are moving with higher speed, a handover decision just based on the hop distance is not yielding an optimum result any more.

Considering the example of Fig. 1, a mobile node is moving from left to right (indicated by the arrow) while being connected to gateway A. After some time the mobile node recognises that gateway B is closer than gateway A and the mobile node performs a handover, as illustrated in Fig. 2. At this point in time, according to the selection criteria known in the prior art for candidate gateways the mobile node does not consider gateway C yet, as gateway C is one hop further away than gateway B. However, the mobile node then just moves slightly further to the right and recognises that now C is the closest gateway. Hence, it performs another handover to gateway C, as illustrated in Fig. 3.

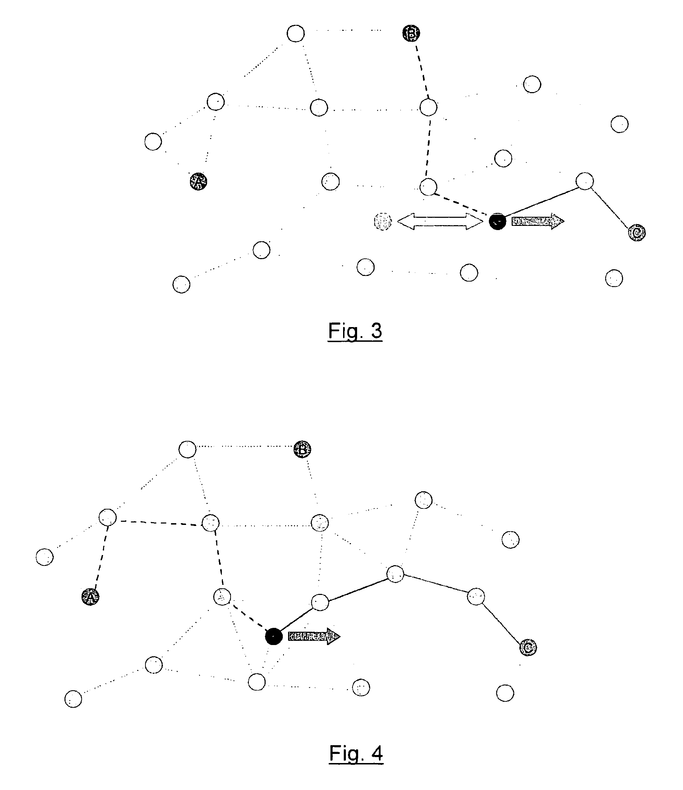

In fact, the handover to gateway B illustrated in Fig. 2 was unnecessary, as the mobile node was connected to it for a very short time only (as indicated by the double-headed arrow in Fig. 3). This increases control overhead in the network and handover delay, thus unnecessarily reducing the system performance.

Accordingly, it is an object of the invention to provide a method for selecting a candidate gateway for a handover in a MRAN in a more efficient manner.

WO 2004/023740 discloses to detect the movement of a node in an ad-hoc network based on its signal strength, if the signal from another node gets stronger the node comes closer. For adhoc networks with hybrid architecture the movement of nodes relative to a trunk node may be detected. Router election could be based on the movement, depending on the node's movement towards or away from the trunk node.

### SUMMARY OF THE INVENTION

The present invention is defined in the independent claims. The dependent claims define embodiments of the invention.

Selecting the candidate gateway or the actual gateway for a handover based on measuring a change of a metrics over time makes it possible to take into account the effects which the movement of the mobile node has onto these metrics, thereby taking into account any advantageous or disadvantageous effects of this movement:

According to one embodiment the method comprises:

comparing the change of network metrics for a plurality of candidate gateways, and

selecting the gateway to which a handover is performed such that a gateway for which the change in the network metrics indicates that it is preferable over other candidate gateways is preferred when selecting the actual gateway for the hanover.

Comparing the network metrics changes of multiple candidates and selecting the one for which the network metrics change indicates that it is preferable makes it possible to appropriately take into account the dynamic change of the network parameters which correspond to the movement of the mobile node and thereby help in selecting a suitable gateway for the handover which is preferable over the other candidate gateways.

According to one embodiment said metrics is one or more of the following:

the hop count between said mobile node and said candidate gateway;
the delay between said mobile node and said candidate gateway;
the bandwidth between said mobile node and said gateway.

The hop count and the delay are two metrics which are particularly indicative of the motion of the mobile node, and therefore they either alone or in combination may be taken into account when deciding to which candidate gateway a handover should be performed. Furthermore, additionally or alternatively, the bandwidth is a parameter indicative of the quality of the connection and its change over time may according to one embodiment be a further or additional criterion for selecting the appropriate gateway for a handover.

According to one embodiment the change in the metrics for a certain candidate gateway is representative of the relative movement of said mobile node towards said candidate gateway, and
when determining the gateway for the handover, preferring a gateway towards
which the relative movement of the mobile node is higher over a gateway towards
which the relative movement of the mobile node is lower.

Preferring a gateway towards which there is a higher amount of movement of the mobile node compared to other gateways is preferable because for gateways selected in this manner there is a higher likelihood that the connection can be maintained for a longer time compared to other gateways. This is because for such a gateway it will take longer until the mobile node leaves its coverage, moreover the likelihood is low that during the movement there will show up another gateway having a network parameter indicating it as more preferable.

Therefore, selecting the candidate gateway for which the metrics change indicates the highest amount of movement towards it compared to other gateways is a selection which is particularly preferable.

According to one embodiment said first moment in time is the time when a gateway is discovered by said mobile node; and/or
said second moment in time is the moment when a handover is to be performed.

Using the discovery time of a gateway and the time of the handover as the moment based on which the metrics change is determined makes use of the metrics determination which mostly automatically is done together with the gateway discovery and furthermore at the moment where the handover is to be performed, so that no additional metrics determinations need to be made.

According to one embodiment said relative motion is determined by dividing the difference between the value of the metrics at the detection time of the gateway and the current value of the metrics distance through the value of the metrics at the detection time of the candidate gateway.

Determining the relative amount of the metrics change is an elegant way of determining the relative motion of the mobile node towards the multiple candidate gateways.

According to one embodiment in addition to said preference for a candidate gateway having a higher relative motion towards it one or more further criteria are considered when determining the gateway for the handover, said further criteria being one or more of the following:

the absolute distance to said candidate gateway;
the bandwidth of the connection to said candidate gateway;
the delay time towards said candidate gateway
the available services and/or the quality of service offered by a candidate gateway.

Taking into account additional criteria further to the metrics change parameter makes it possible to take into account that despite a certain candidate gateway may seem preferable based on the metrics change nevertheless other parameters may lead to the decision that it is actually better not to consider this candidate gateway as a gateway for the handover. One such additional criterion may be the absolute hop count indicating the total distance to such a candidate gateway. For example, candidate gateways which are very distant may be discarded because due to the overall movement of the MRAN it may be too likely that the mobile node leaves the coverage of such a candidate gateway so that soon a further handover would become necessary. Further such additional criteria may for example be the bandwidth, the delay time, or also for example the available services offered by a candidate gateway or the quality of service offered by a candidate gateway.

According to one embodiment there is provided an apparatus for performing a gateway selection for a multihop handover of a mobile node, said apparatus comprising:

a module for determining for a plurality of candidate gateways which are candidates for a handover of said mobile node the change of a network metrics from a first moment in time to a second moment in time, said network metrics being indicative of a property of the connection between said mobile node and a respective candidate gateway;
a module for selecting the gateway to which a handover is performed based on the respective changes of said metrics from said first moment in time to said

**EP 1 821 467 B1**

second moment in time of said gateways.

According to one embodiment there is provided an apparatus further comprising a module or modules for implementing methods according to embodiments of the invention.

## BRIEF DESCRIPTION OF THE DRAWINGS

Fig. 1 schematically illustrates a MRAN scenario in which a handover is to be performed.
Fig. 2 schematically illustrates the scenario shown in Fig. 1 at a later moment in time.
Fig. 3 schematically illustrates the scenario shown in Figs. 1 and 2 at an even later moment in time.
Fig. 4 schematically illustrates the performance of a handover in a MRAN environment according to an embodiment of the invention.

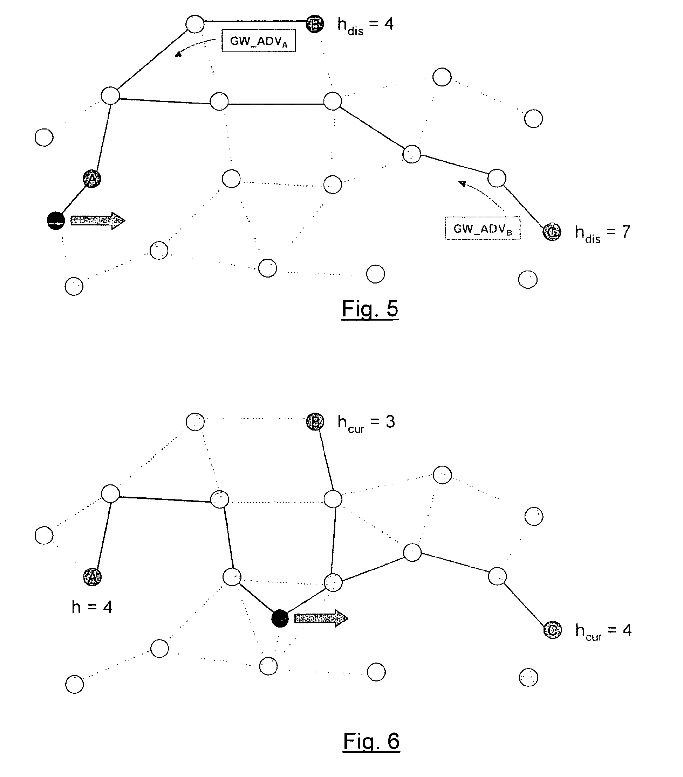

Fig. 5 schematically illustrates the gateway discovery according to an embodiment of the invention.
Fig. 6 schematically illustrates the handover according to an embodiment of the invention.

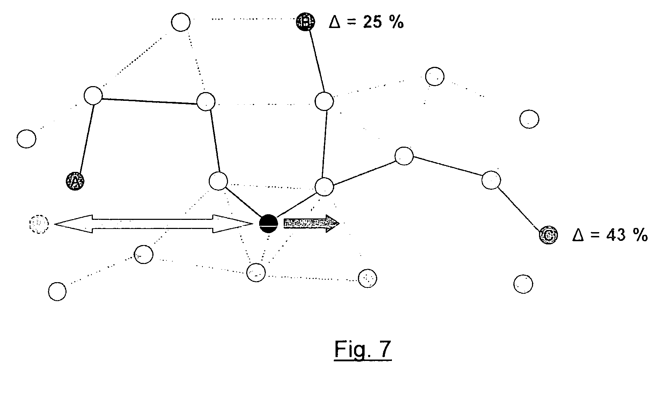

Fig. 7 schematically illustrates the criteria for a handover according to an embodiment of the invention.

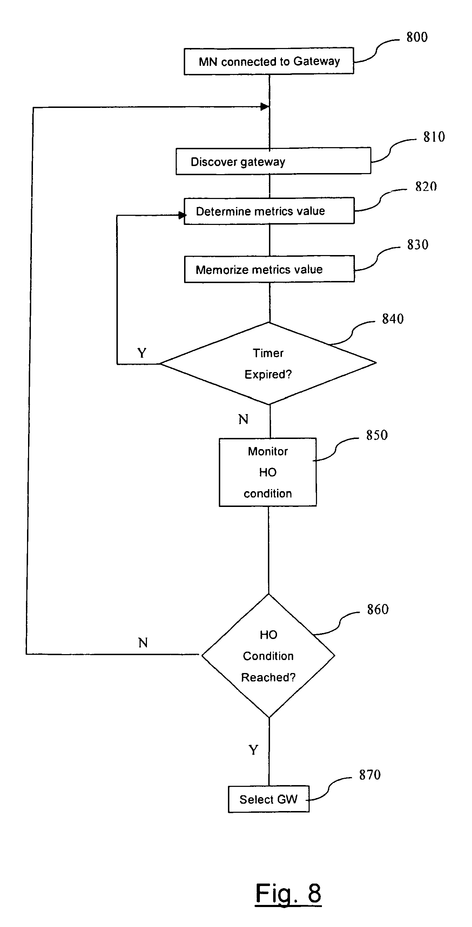

Fig. 8 shows a flow chart illustrating schematically a method for a handover according to an embodiment of the invention.

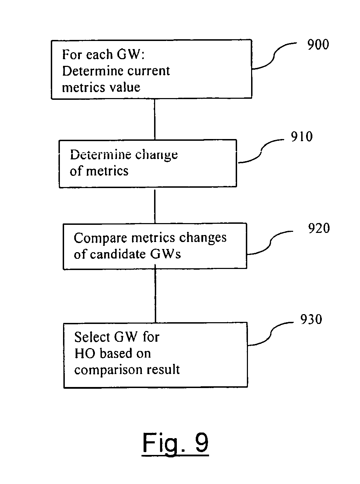

Fig. 9 schematically illustrates a method for selecting a gateway according to an embodiment of the invention.

## DETAILED DESCRIPTION

As has been explained in connection with Figs. 2 and 3, performing a handover to the closest candidate gateway is not always the best solution. One could imagine that the mobile node would refrain from performing the handover to B first, because it knows that gateway B is upright to the mobile node's movement direction. However, according to prior art solutions this information is not available.

As mobile node is moving towards gateway C, it would have been better to perform a multihop handover directly to gateway C (see Fig.4), even if it is not the closest gateway at the time of the handover decision.

According to one embodiment the mobile node determines its relative movement towards candidate gateways. According to one embodiment this can be achieved by the mobile node comparing the hop distance of a gateway at the time of discovery of the gateway and at the point in time when a handover needs to be performed. Based on this information, the mobile node can determine the relative hop distance reduction to this gateway and can compare it to the one of other candidate gateways. The mobile node can then base the handover decision on the hop distance of the candidate gateways and the relative hop distance reduction.

According to one embodiment there is a preference for selecting a candidate gateway towards which the mobile node has a higher relative hop count reduction over such gateways for which the relative hop count reduction assumes a lower value. In this way the mobile node uses a motion-aware selection of a gateway for a handover.

The motion-aware gateway selection prevents the mobile node from connecting to gateways for very short time only. This reduces the number of unnecessary handovers, thus reducing control overhead in the network and the loss (or delay) of payload packets. Hence, the overall system performance is increased compared to the conventional gateway selection based on hop count only.

In one embodiment knowledge of the absolute position of the candidate gateways is not required, hence no location information or geographic routing is required. This is because the motion information is obtained by using a metrics such as the hop count which is representative of the relative geographic location of the mobile node and the candidate gateways.

The aforementioned solution works with any ad hoc routing protocol, and with reactive and proactive gateway discovery. The hop distance of the gateways may be obtained from the routing protocol or gateway from advertisements. This makes the solution generally applicable to virtually all routing protocols or gateway discovery scenarios.

In the following an embodiment of the invention will be described in somewhat more detail. The initial scenario is illustrated in Fig. 5 where the mobile node is at first connected to gateway A and moves into the direction indicated by the arrow while being connected to gateway A. As soon as the mobile node discovers new candidate gateways (e.g., by receiving advertisement messages GW_ADV from them as illustrated in Fig. 5), it obtains the hop counts $h_{dis}$ of the gateways (e.g. either from the routing protocol or from the GW_ADV messages) and memorises them. This is illustrated in Fig. 5, where the mobile node is currently connected to gateway A and discovers gateways B and C with hop distances 4 and 7, respectively.

While moving further, at some point in time the mobile node detects that the current gateway is not the closest one anymore. Now, it determines the current hop distances $h_{cur}$ of the candidate gateways, as shown in Fig. 6.

Now, the mobile node calculates the relative hop distance reduction to the candidate gateways:

$$\Delta = (h_{dis} - h_{cur}) / h_{dis}$$

Considering the example shown in Fig.6, the mobile node now obtains ∆ B = 25 % and $\Delta_c$ = 43 %, as illustrated in Fig. 7. Hence, it is moving relatively more towards gateway C than towards gateway B. As gateway C also is only one hop further away than gateway B, mobile node decides to immediately hand over to gateway C.

The parameter ∆ can also be used to identify that the mobile node is moving away from a gateway. In this case, ∆ is negative. If the parameter is negative, according to one embodiment there is a negative preference for this gateway to be selected as a gateway for a handover.

In the following there will be described a further embodiment in connection with the flowchart shown in Fig. 8. The procedure starts with operation 800 where the mobile node is connected to a certain gateway. In operation 810 then there is discovered a further gateway which may later be considered as a candidate gateway for a handover. In operation 820 a metrics value is determined for this gateway, the metrics value being for example the hop count from the current mobile note to this newly discovered gateway. Another metrics value might be the bandwidth for the connection between the mobile node and the newly discovered gateway or the delay between the mobile node and the newly discovered gateway. In operation 830 this metrics value is memorized so that it may later be considered when the decision about to which gateway the handover should be performed is to be made. Operation 840 illustrates a timer which may be used for ensuring that the memorized metrics value is not out of date. The timer may be set to a certain timing value, and if it has expired the procedure returns to operation 820 and the metrics value is determined again. This may be useful if actually the movement of the mobile node has ceased so that the actual metrics value may not change any more and a metrics value for a gateway which has been determined a long time ago is not representative any more of the actual present movement of the mobile node.

However, it should be noticed that the timer operation as indicated by element 840 in Fig. 8 is optional and according to a further embodiment may be omitted.

In operation 850 and handover condition is monitored. This may for example be implemented by monitoring the hop count between the mobile node and the present gateway and comparing it with the also monitored hop count between the mobile node and the other candidate gateways which have been discovered in operation 810. If one of the candidate gateways has a smaller hop count than the present gateway this may be interpreted by operation 860 as that the condition for performing a handover (HO) has been reached. As long as no such handover condition has been reached, the procedure returns again and further candidate gateways may be discovered in operation 810.

However, if checkbox 860 decides that a handover condition has been reached, the procedure for selecting a gateway for the handover (operation 870) will be executed. It should be noticed that the comparison of the hop count of the present gateway with the hop count of other candidate gateways is just one example for determining whether a handover condition has been reached, and other ways of performing the check illustrated in operation 860 may be used as well, for example by determining the quality of the connection to the present gateway, the bandwidth, or anything alike.

In the following the actual selection of a gateway for the handover (operation 870 in Fig. 8) according to one embodiment will be explained in somewhat more detail in connection with the flow chart shown in Fig. 9. Operation 900 in Fig. 9 illustrates that for each candidate gateway (the gateways discovered in operation 810 of Fig. 8) there is determined the current metrics value. This may correspond to determining the current hop count between the mobile node and the candidate gateways. However, additionally or alternatively it may correspond to determining any other current metrics value such as the bandwidth or the delay between the present mobile node and the candidate gateways.

In operation 910 then there is for each candidate gateway determined a change of the metrics. This may for example correspond to the difference between the metrics value measured in operation 900 and an initial metrics value determined and memorized in operation 830 of Fig. 8. Alternatively or additionally, rather than determining just the difference of the two values there may be determined a relative change by dividing the difference of the metrics value at a first point of time and the metrics value of a second point of time through the metrics value measured at a first point of time.

In operation 920 then the different change parameters which have been determined in operation 910 for the different candidate gateways are compared. In operation 930 then there is selected the candidate gateway for the handover based on the result of the comparison.

The selection may for example be such that the candidate gateway which has the highest metrics change or the highest relative metrics change among the candidate gateways will be selected for a handover. Alternatively or additionally further criteria may be considered in operation 930. For example, rather than merely basing the decision on the metrics change parameters determined in operation 910 and compared in operation 920, further criteria or parameters may be considered. For example, the total hop count between the present mobile node and a candidate gateway may be considered, and if the hop count is considered to be too large, e.g. because it exceeds a predetermined threshold value, this candidate gateway may be discarded even despite the change of metrics for this candidate gateway would be considered favorable and would lead to selecting this candidate gateway as the gateway for the handover.

In a similar manner other parameters might be considered as secondary parameters influencing the decision 930. Such further parameters might be the bandwidth, the quality of service, the possible availability of any services of candidate gateways, or the like.

When considering the measurement of the change of the metrics it is according to one embodiment preferable to select a candidate gateway where the change of the metrics indicates that the mobile node has the highest relative movement towards this candidate gateway to other candidate gateways. This can be achieved by measuring the relative hop count change and by selecting the candidate gateway for which the relative hop count change is highest compared to other candidate gateways, as has already been explained in connection with previous embodiments.

Similarly, instead of the hop count the delay between the mobile node and the candidate gateways could be used. This would lead to a similar result as using the hop count because the delay in multihop networks typically linearly increases with the number of hops.

A further parameter of metrics which could be used is the bandwidth. When doing so, in operation 930 the selection could be carried out such that a candidate gateway for which a higher bandwidth can be achieved is preferred over other candidate gateways.

According to one embodiment operation 930 operates such that based on a parameter indicating the change of a metrics (or one or more metrics) is considered for multiple candidate gateways, and those gateways for which the parameter indicates that they are preferable to be used as a handover gateway are preferred over other candidate gateways when actually selecting the handover gateway.

It will be readily apparent for the skilled person that the embodiments of the invention as explained herein before may be implemented by software, by hardware or by a combination of both of them. The mobile nodes as explained in connection with the embodiments illustrated herein before may for example be mobile phones, smart phones, PDAs or any other mobile devices. They may be connected to the gateways via other mobile nodes acting as relays, whereas these other mobile nodes may similarly be computers, laptops, mobile phones, smart phones, PDAs, or similar devices.

**Claims**

1. A method for gateway selection for a multihop handover of a mobile node in a multihop radio access network, said method comprising:

   determining for a plurality of candidate gateways which are candidates for a handover of said mobile node the change of a network metrics from a first moment in time to a second moment in time, said network metrics being indicative of a property of the connection between said mobile node and a respective candidate gateway;
   selecting the gateway to which a handover is performed from the plurality of gateways for which said change of metrics has been determined based on the respective changes of said metrics of said gateways from said first moment in time to said second moment in time, said method further.

comprising:

   comparing the change of network metrics for a plurality of candidate gateways, and
   selecting the gateway to which a handover is performed such that a gateway for
   which the change in the network metrics indicates that it is preferable over other candidate gateways is preferred when selecting the actual gateway for the handover,

wherein said metrics is one or more of the following:

   the hop count between said mobile node and said candidate gateway;
   the delay between said mobile node and said candidate gateway;
   the bandwidth between said mobile node and said gateway,

wherein
the change in the metrics for a certain candidate gateway is representative of the relative movement of said mobile node towards said candidate gateway, and
when determining the gateway for the handover, preferring a gateway towards which the relative movement of the mobile node is higher over a gateway towards which the relative movement of the mobile node is lower.

2. The method of claims 1, wherein

   said first moment in time is the time when a gateway is discovered by said mobile node; and/or
   said second moment in time is the moment when a handover is to be performed.

3. The method of one of claims 1 to 2, wherein said relative motion is determined by dividing the difference between the value of the metrics at the detection time of the gateway and the current value of the metrics through the value of the metrics at the detection time of the candidate gateway.

4. The method of claims 1 to 3, wherein in addition to said preference for a candidate gateway having a higher relative motion towards it one or more further criteria are considered when determining the gateway for the handover, said further criteria being one or more of the following:

the absolute distance to said candidate gateway;

the bandwidth of the connection to said candidate gateway;

the delay time towards said candidate gateway the available services and/or the quality of service offered by a candidate gateway.

5. An apparatus for performing a gateway selection for a multihop handover of a mobile node in a multihop radio access network, said apparatus comprising:

a module for determining for a plurality of candidate gateways which are candidates for a handover of said mobile node the change of a network metrics from a first moment in time to a second moment in time, said network metrics being indicative of a property of the connection between said mobile node and a respective candidate gateway;

a module for selecting the gateway to which a handover is performed from the plurality of gateways for which said change of metrics has been determined based on the respective changes of said metrics of said gateways from said first moment in time to said second moment in time, said apparatus further comprising:

a module for comparing the change of network metrics for a plurality of candidate gateways, and

a module for selecting the gateway to which a handover is performed such that a gateway for which the change in the network metrics indicates that it is preferable over other candidate gateways is preferred when selecting the actual gateway for the handover,

wherein said metrics is one or more of the following:

the hop count between said mobile node and said candidate gateway;

the delay between said mobile node and said candidate gateway;

the bandwidth between said mobile node and said gateway,

wherein

the change in the metrics for a certain candidate gateway is representative of the relative movement of said mobile node towards said candidate gateway, and said apparatus being adapted to when determining the gateway for the handover, preferring a gateway towards which the relative movement of the mobile node is higher over a gateway towards which the relative movement of the mobile node is lower.

6. The apparatus of claim 5, wherein said first moment in time is the time when a gateway is discovered by said mobile node; and/or said second moment in time is the moment when a handover is to be performed.

7. The apparatus of one of claims 5 to 6, wherein said apparatus is adapted to determine the relative motion by dividing the difference between the value of the metrics at the detection time of the gateway and the current value of the metrics through the value of the metrics at the detection time of the candidate gateway.

8. The apparatus of one of claims 5 to 7, wherein in addition to said preference for a candidate gateway having a higher relative motion towards it one or more further criteria are considered when determining the gateway for the handover, said further criteria being one or more of the following:

the absolute distance to said candidate gateway;

the bandwidth of the connection to said candidate gateway;

the delay time towards said candidate gateway the available services and/or the quality of service offered by a candidate gateway.

9. A computer program comprising computer program code which when being executed on a computer enables said computer to carry out a method according to one of claims 1 to 4.

**Patentansprüche**

1. Verfahren zur Gateway-Auswahl für einen Multihop-Handover eines mobilen Knotens in einem Multihop-Funkzugangsnetz (*Multihop Radio Access Network*), wobei das Verfahren umfasst:

Bestimmen der Änderung einer Netzmetrik zwischen einem ersten Zeitpunkt und einem zweiten Zeitpunkt für mehrere Kandidaten-Gateways, die Kandidaten für einen Handover des mobilen Knotens sind, wobei die Netzmetrik eine Eigenschaft der Verbindung zwischen dem mobilen Knoten und einem entsprechenden Kandidaten-Gateway angibt;

Auswählen des Gateways, zu dem ein Handover ausgeführt wird, aus den mehreren Gateways, für die die Änderung der Metrik bestimmt worden ist, basierend auf den entsprechenden Änderungen der Metriken der Gateways zwischen dem ersten Zeitpunkt und dem zweiten Zeitpunkt, wobei das Verfahren ferner umfasst:

Vergleichen der Änderung der Netzmetrik für mehrere Kandidaten-Gateways; und Auswählen des Gateways, zu dem ein Handover ausgeführt wird, derart, dass ein Gateway, für das die Änderung der Netzmetrik angibt, dass es gegenüber anderen Kandidaten-Gateways zu bevorzugen ist, bei der Auswahl des tatsächlichen Gateways für den Handover bevorzugt wird,

wobei die Metrik eine oder mehrere der folgenden Metriken ist:

die Hop-Anzahl zwischen dem mobilen Knoten und dem Gateway-Kandidaten; die Verzögerung zwischen dem mobilen Knoten und dem Kandidaten-Gateway; und die Bandbreite zwischen dem mobilen Knoten und dem Gateway,

wobei die Änderung der Metrik für ein bestimmtes Kandidaten-Gateway die relative Bewegung des mobilen Knotens zu dem Kandidaten-Gateway repräsentiert und

bei der Bestimmung des Gateways für den Handover Bevorzugen eines Gateways, zu dem die relative Bewegung des mobilen Knotens höher ist, gegenüber einem Gateway, zu dem die relative Bewegung des mobilen Knotens niedriger ist.

2. Verfahren nach Anspruch 1, wobei

der erste Zeitpunkt der Zeitpunkt ist, zu dem ein Gateway von dem mobilen Knoten entdeckt wird; und/oder der zweite Zeitpunkt der Zeitpunkt ist, zu dem ein Handover ausgeführt werden soll.

3. Verfahren nach einem der Ansprüche 1 bis 2, wobei die relative Bewegung durch Dividieren der Differenz zwischen dem Wert der Metrik zum Zeitpunkt der Erfassung des Gateways und dem momentanen Wert der Metrik durch den Wert der Metrik zum Zeitpunkt der Erfassung des Kandidaten-Gateways bestimmt wird.

4. Verfahren nach den Ansprüchen 1 bis 3, wobei zusätzlich zu der Bevorzugung eines Kandidaten-Gateways, zu dem die relative Bewegung höher ist, ein oder mehrere weitere Kriterien betrachtet werden, wenn das Gateway für den Handover bestimmt wird, wobei die weiteren Kriterien eines oder mehrere der folgenden Kriterien sind:

die absolute Distanz zu dem Kandidaten-Gateway; die Bandbreite der Verbindung zu dem Kandidaten-Gateway; die Verzögerungszeit zu dem Kandidaten-Gateway; und die verfügbaren Dienste und/oder die Dienstqualität, die von dem Kandidaten-Gateway angeboten werden.

5. Vorrichtung zum Ausführen einer Gateway-Auswahl für einen Multihop-Handover eines mobilen Knotens in einem Multihop-Funkzugangsnetz (*Multihop Radio Access Network*), wobei die Vorrichtung umfasst:

ein Modul zum Bestimmen der Änderung einer Netzmetrik zwischen einem ersten Zeitpunkt und einem zweiten Zeitpunkt für mehrere Kandidaten-Gateways, die Kandidaten für einen Handover des mobilen Knotens sind, wobei die Netzmetrik eine Eigenschaft der Verbindung zwischen dem mobilen Knoten und einem jeweiligen Kandidaten-Gateway angibt; ein Modul zum Auswählen des Gateways, zu dem ein Handover ausgeführt wird, aus den mehreren Gateways, für die die Änderung der Metrik bestimmt worden ist, basierend auf den jeweiligen Änderungen der Metriken der Gateways zwischen dem ersten Zeitpunkt und dem zweiten Zeitpunkt, wobei die Vorrichtung ferner umfasst:

ein Modul zum Vergleichen der Änderung der Netzmetrik für mehrere Kandidaten-Gateways und ein Modul zum Auswählen des Gateways, zu dem ein Handover ausgeführt wird, derart, dass ein Gateway, für das die Änderung der Netzmetrik angibt, dass es gegenüber anderen Kandidaten-Gateways zu bevorzugen ist, bevorzugt wird, wenn das tatsächliche Gateway für den Handover ausgewählt wird,

wobei die Metrik eine oder mehrere der Folgenden ist:

die Hop-Anzahl zwischen dem mobilen Knoten und dem Kandidaten-Gateway; die Verzögerung zwischen dem mobilen Knoten und dem Kandidaten-Gateway; und die Bandbreite zwischen dem mobilen Knoten und dem Gateway,

wobei die Änderung der Metrik für ein bestimmtes Kandidaten-Gateway die relative Bewegung des mobilen Knotens zu dem Kandidaten-Gateway repräsentiert und

die Vorrichtung so beschaffen ist, dass sie dann, wenn das Gateway für den Handover bestimmt wird, ein Gateway, zu dem die relative Bewegung des mobilen Knotens höher ist, gegenüber einem Gateway, zu dem die relative Bewegung des mobilen Knotens niedriger ist, bevorzugt.

**6.** Vorrichtung nach Anspruch 5, wobei

der erste Zeitpunkt der Zeitpunkt ist, zu dem ein Gateway durch den mobilen Knoten entdeckt wird; und/oder
der zweite Zeitpunkt der Zeitpunkt ist, zu dem ein Handover ausgeführt werden soll.

**7.** Vorrichtung nach einem der Ansprüche 5 bis 6, wobei die Vorrichtung so beschaffen ist, dass sie die relative Bewegung durch Dividieren der Differenz zwischen dem Wert der Metrik zum Zeitpunkt der Erfassung des Gateways und dem momentanen Wert der Metrik durch den Wert der Metrik zum Zeitpunkt der Erfassung des Kandidaten-Gateways bestimmt.

**8.** Vorrichtung nach einem der Ansprüche 5 bis 7, wobei zusätzlich zu der Bevorzugung eines Kandidaten-Gateways, zu dem die relative Bewegung höher ist, ein oder mehrere weitere Kriterien betrachtet werden, wenn das Gateway für den Handover bestimmt wird, wobei die weiteren Kriterien eines oder mehrere der folgenden Kriterien sind:

die absolute Distanz zu dem Kandidaten-Gateway;
die Bandbreite der Verbindung zu dem Kandidaten-Gateway;
die Verzögerungszeit zu dem Kandidaten-Gateway; und
die verfügbaren Dienste und/oder die Dienstqualität, die von dem Kandidaten-Gateway angeboten werden.

**9.** Computerprogramm, das Computerprogrammcode enthält, der dann, wenn er in einem Computer ausgeführt wird, den Computer in die Lage versetzt, ein Verfahren nach einem der Ansprüche 1 bis 4 auszuführen.

**Revendications**

**1.** Procédé pour la sélection de passerelle pour un transfert à bonds multiples d'un noeud mobile dans un réseau d'accès radio à bonds multiples, ledit procédé comprenant :

la détermination pour une pluralité de passerelles candidates qui sont candidates pour un transfert dudit noeud mobile le changement d'une métrique de réseau d'un premier moment dans le temps à un deuxième moment dans le temps, ladite métrique de réseau étant indicative d'une propriété de la connexion entre ledit noeud mobile et une passerelle candidate respective ;
la sélection de la passerelle à laquelle un transfert est effectué parmi la pluralité de passerelles pour lesquelles ledit changement de métrique a été déterminé sur la base des changements respectifs de ladite métrique desdites passerelles dudit premier moment dans le temps au dit deuxième moment dans le temps, ledit procédé comprenant en outre :

la comparaison du changement de métrique de réseau pour une pluralité de passerelles candidates, et
la sélection de la passerelle à laquelle un transfert est effectué de manière qu'une passerelle pour laquelle le changement de la métrique de réseau indique qu'elle est préférable aux autres passerelles candidates soit préférée lors de la sélection de la passerelle réelle pour le transfert,

dans lequel ladite métrique est une ou plusieurs des suivantes :

le nombre de bonds entre ledit noeud mobile et ladite passerelle candidate ;
le retard entre ledit noeud mobile et ladite passerelle candidate ;
la largeur de bande entre ledit noeud mobile et ladite passerelle candidate ;

dans lequel le changement de la métrique pour une certaine passerelle candidate est représentatif du mouvement relatif dudit noeud mobile vers ladite passerelle candidate, et
lors de la détermination de la passerelle pour le transfert, la préférence d'une passerelle vers laquelle le mouvement relatif du noeud mobile est supérieur sur une passerelle vers laquelle le mouvement relatif du noeud mobile est inférieur.

**2.** Procédé selon la revendication 1, dans lequel

ledit premier moment dans le temps est le moment où une passerelle est découverte par ledit noeud mobile ; et/ou
ledit deuxième moment dans le temps est le moment où un transfert doit être effectué.

**3.** Procédé selon une des revendications 1 à 2, dans lequel ledit mouvement relatif est déterminé en divisant la différence entre la valeur de la métrique à l'instant de détection de la passerelle et la valeur actuelle de la métrique par la valeur de la métrique à l'instant de détection de la passerelle candidate.

4. Procédé selon une des revendications 1 à 3, dans lequel, en plus de ladite préférence d'une passerelle ayant un mouvement relatif supérieur vers celle-ci, un ou plusieurs autres critères sont considérés lors de la détermination de la passerelle pour le transfert, lesdits autres critères étant un ou plusieurs des suivants :

la distance absolue à ladite passerelle ;
la largeur de bande de la connexion à ladite passerelle candidate ;
le retard vers ladite passerelle candidate ;
les services disponibles et/ou la qualité de service offerts par une passerelle candidate.

5. Dispositif pour effectuer une sélection de passerelle pour un transfert à bonds multiples dans un réseau d'accès radio à bonds multiples, ledit dispositif comprenant :

un module pour déterminer pour une pluralité de passerelles candidates qui sont candidates pour un transfert dudit noeud mobile le changement d'une métrique de réseau d'un premier moment dans le temps à un deuxième moment dans le temps, ladite métrique de réseau étant indicative d'une propriété de la connexion entre ledit noeud mobile et une passerelle candidate respective ;
un module pour sélectionner la passerelle à laquelle un transfert est effectué parmi la pluralité de passerelles pour lesquelles ledit changement de métrique a été déterminé sur la base des changements respectifs de ladite métrique desdites passerelles dudit premier moment dans le temps au dit deuxième moment dans le temps, ledit dispositif comprenant en outre :

un module pour comparer le changement de métrique de réseau pour une pluralité de passerelles candidates, et
un module pour sélectionner la passerelle à laquelle un transfert est effectué de manière qu'une passerelle pour laquelle le changement de la métrique de réseau indique qu'elle est préférable aux autres passerelles candidates soit préférée lors de la sélection de la passerelle réelle pour le transfert,

dans lequel ladite métrique est une ou plusieurs des suivantes :

le nombre de bonds entre ledit noeud mobile et ladite passerelle candidate ;
le retard entre ledit noeud mobile et ladite passerelle candidate ;
la largeur de bande entre ledit noeud mobile et ladite passerelle candidate ;

dans lequel le changement de la métrique pour une certaine passerelle candidate est représentatif du mouvement relatif dudit noeud mobile vers ladite passerelle candidate, et
ledit dispositif étant adapté lors de la détermination de la passerelle pour le transfert, la préférence d'une passerelle vers laquelle le mouvement relatif du noeud mobile est supérieur sur une passerelle vers laquelle le mouvement relatif du noeud mobile est inférieur.

6. Dispositif selon la revendication 5, dans lequel

ledit premier moment dans le temps est le moment où une passerelle est découverte par ledit noeud mobile ; et/ou
ledit deuxième moment dans le temps est le moment où un transfert doit être effectué.

7. Dispositif selon une des revendications 5 à 6, dans lequel ledit mouvement relatif est déterminé en divisant la différence entre la valeur de la métrique à l'instant de détection de la passerelle et la valeur actuelle de la métrique par la valeur de la métrique à l'instant de détection de la passerelle candidate.

8. Dispositif selon une des revendications 5 à 7, dans lequel, en plus de ladite préférence d'une passerelle ayant un mouvement relatif supérieur vers celle-ci, un ou plusieurs autres critères sont considérés lors de la détermination de la passerelle pour le transfert, lesdits autres critères étant un ou plusieurs des suivants :

la distance absolue à ladite passerelle ;
la largeur de bande de la connexion à ladite passerelle candidate ;
le retard vers ladite passerelle candidate ;
les services disponibles et/ou la qualité de service offerts par une passerelle candidate.

9. Programme d'ordinateur comprenant un code de programme d'ordinateur qui, quand il est exécuté sur un ordinateur, permet au dit ordinateur d'exécuter un procédé selon l'une des revendications 1 à 4.

**Mobile Node**
**Gateway**
**Relay**

····· Wireless link
——— Path to current GW

<u>Fig. 1</u>

- - - - Path to old GW

<u>Fig. 2</u>

Fig. 3

Fig. 4

$h_{dis} = 4$

GW_ADV$_A$

GW_ADV$_B$

$h_{dis} = 7$

Fig. 5

$h_{cur} = 3$

h = 4

$h_{cur} = 4$

Fig. 6

$\Delta = 25\ \%$

$\Delta = 43\ \%$

Fig. 7

```
                    ┌─────────────────────────┐  ⌐ 800
                    │   MN connected to Gateway │
                    └─────────────────────────┘
                                 │
          ┌──────────────────────┤
          │                      │
          │          ┌────────────────────────┐  ⌐ 810
          │          │     Discover gateway     │
          │          └────────────────────────┘
          │                      │
          │          ┌────────────────────────┐  ⌐ 820
          │   ┌─────►│  Determine metrics value │
          │   │      └────────────────────────┘
          │   │                  │
          │   │      ┌────────────────────────┐  ⌐ 830
          │   │      │   Memorize metrics value │
          │   │      └────────────────────────┘
          │   │                  │
          │   │               ◇ 840
          │   │     Y      ╱ Timer  ╲
          │   └──────────╱  Expired? ╲
          │              ╲           ╱
          │               ╲         ╱
          │                   │ N
          │          ┌────────────────────────┐  ⌐ 850
          │          │        Monitor          │
          │          │          HO             │
          │          │       condition         │
          │          └────────────────────────┘
          │                      │
          │                   ◇ 860
          │                ╱   HO    ╲
          │     N        ╱  Condition  ╲
          └────────────╱    Reached?    ╲
                        ╲               ╱
                         ╲             ╱
                              │ Y
                    ┌─────────────────┐  ⌐ 870
                    │    Select GW      │
                    └─────────────────┘
```

## Fig. 8

15

For each GW:
Determine current
metrics value                           900

Determine change
of metrics                              910

Compare metrics changes
of candidate GWs                        920

Select GW for
HO based on
comparison result                       930

## Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004023740 A